# EUROPÄISCHE PATENTANMELDUNG

(11) **EP 4 092 710 A1**
(43) Veröffentlichungstag der Anmeldung: **23.11.2022**
(21) Anmeldenummer: 22182893.2
(22) Anmeldetag: 19.05.2016
(51) Int. Cl.: H01H 71/24, H01H 71/28, H02H 3/087

(54) **SCHUTZSCHALTER**

(30) Priorität: 05.08.2015 DE 102015214966
(62) Teilanmeldung aus: 19167864.8
(71) Anmelder: Ellenberger & Poensgen GmbH, 90518 Altdorf (DE)
(72) Erfinder: KÖPF, Hendrik-Christian, 90480 Nürnberg (DE); WILKENING, Ernst-Dieter, 38108 Braunschweig (DE)
(74) Vertreter: FDST Patentanwälte

(57) **Zusammenfassung**

Die Erfindung betrifft einen Schutzschalter (14) zur Gleichstromunterbrechung, insbesondere eines Bordnetzes (12, 16) eines Fahrzeugs (2), mit einem Hauptstrompfad (22), der einen Schalter (52) aufweist, und mit einem Reed-Relais (34) zur Erfassung eines elektrischen Stromflusses (I) über den Hauptstrompfad (22). Der Schalter (52) ist mit dem Reed-Relais (34) gekoppelt. Die Erfindung betrifft ferner die Verwendung eines Schutzschalters (14).

## Beschreibung

Die Erfindung betrifft einen Schutzschalter zur Gleichstromunterbrechung, mit einem Hauptstrompfad, der einen Schalter aufweist. Der Schutzschalter ist insbesondere ein Bestandteil eines Bordnetzes eines Fahrzeugs, wie eines Kraftfahrzeugs oder eines Flugzeugs. Die Erfindung betrifft ferner die Verwendung eines Schutzschalters zur Absicherung eines Bordnetzes eines Fahrzeugs.

Photovoltaikanlagen weisen üblicherweise eine Anzahl von Photovoltaikmodulen auf, die elektrisch in Reihe bzw. parallel zueinander geschaltet sind. Der Zusammenschluss der Photovoltaikmodule selbst ist mittels einer Stromleitung mit einem Umrichter kontaktiert, mittels dessen die von den Photovoltaikmodulen bereitgestellte elektrische Energie in ein Versorgungsnetzwerk eingespeist wird, welches üblicherweise einen Wechselstrom aufweist. In der Stromleitung hingegen wird prinzipbedingt ein Gleichstrom geführt. Um im Fehlerfall die Photovoltaikmodule von dem Umrichter zu trennen, werden üblicherweise Schutzschalter eingesetzt, mittels derer eine Beschädigung des Umrichters oder ein Abbrand der Photovoltaikmodule aufgrund eines bestehenden elektrischen Stromflusses unterbunden wird. Hierbei werden üblicherweise elektrische Ströme mit einer Stromstärke von einigen 10 Ampere geschaltet, wobei zwischen den einzelnen elektrischen Polen aufgrund einer geeigneten Verschaltung innerhalb des Photovoltaikmoduls an den Kontakten eine elektrische Spannung mit einigen 100 Volt anliegt.

Ein weiteres Einsatzgebiet für Schutzschalter zur Gleichstromunterbrechung stellen Fahrzeuge dar, wie beispielsweise Flugzeuge oder Kraftfahrzeuge. Hierbei weisen Kraftfahrzeuge, die mittels eines Elektromotors angetrieben werden, üblicherweise ein Hochvoltbordnetz auf, das eine Hochvoltbatterie umfasst. Mittels der Hochvoltbatterie wird eine elektrische Spannung zwischen 400 und 500 Volt und eine Stromstärke bis zu einigen 100 Ampere bereitgestellt. Bei einer Fehlfunktion der Hochvoltbatterie oder einem Kurzschluss innerhalb des hiermit verbundenen Umrichters oder Elektromotors ist aus Sicherheitsgründen eine möglichst schnelle Abschaltung des Hochvoltbordnetzes erforderlich. Um einen Abbrand der Hochvoltbatterie zu vermeiden ist eine möglichst geringe Schaltdauer erforderlich. Dies ist auch bei einem Unfall des Kraftfahrzeugs und einem hierdurch bedingten Kurzschluss innerhalb des Elektromotors oder Umrichters zu gewährleisten, wobei je nach Art des Unfalls jedoch ein Ausfall einer Stromversorgung des Schutzschalters nicht ausgeschlossen werden kann.

Eine weitere Herausforderung ist die Detektion des Überstroms selbst, da aufgrund des Gleichstroms keine transformatorische Kopplung mittels Spulen zur Erfassung der Stromstärke verwendet werden kann. Üblicherweise werden daher Bimetall-Sensoren oder Schlagankersysteme herangezogen, die eine dem elektrischen Strom durchflossenen elektrischen Spule aufweisen. Hierbei entstehen jedoch innerhalb der elektrischen Spule Verluste, was einerseits den Wirkungsgrad herabsetzt, und andererseits zu einer Erwärmung des Schutzschalters führt, der auf diesen Wärmeeintrag eingestellt werden muss. Aufgrund der somit erforderlichen Kühlelemente sind die Herstellungskosten erhöht. Eine Alternative hierzu ist die Verwendung eines Shunts, bei dem die abfallende elektrische Spannung über einen bestimmten Leitungsabschnitt erfasst wird, dessen elektrischer Widerstand bekannt ist. Anhand der erfassten elektrischen Spannung wird der elektrische Stromfluss berechnet. Nachteilig hierbei ist, dass der elektrische Widerstand selbst temperaturabhängig ist, was zu einem fehlerbehafteten Wert für die Stromstärke führt. Alternativ hierzu wird für den Shunt ein Material mit einem im Wesentlichen temperaturunabhängigen elektrischen Widerstand gewählt, was jedoch die Herstellungskosten erhöht.

Bei sämtlichen Schutzschaltern sind die Sensoren stets elektrisch mit der Leitung kontaktiert, die den zu unterbrechenden elektrischen Stromfluss führt, sodass der Schutzschalter selbst gegenüber weiteren Bauteilen elektrisch isoliert werden muss. Auch ist es erforderlich, innerhalb des Schutzschalters geeignete Maßnahmen gegen einen unbeabsichtigten Kurzschluss innerhalb des Schutzschalters zu treffen, der anderweitig zu einem Fortbestehen des Stromflusses und folglich einer Funktionsaufhebung des Schutzschalters führen würde.

Der Erfindung liegt die Aufgabe zugrunde, einen besonders geeigneten Schutzschalter zur Gleichstromunterbrechung anzugeben, wobei insbesondere eine Sicherheit erhöht und vorzugsweise Herstellungskosten gesenkt sind. Eine weitere Aufgabe der Erfindung ist die Angabe der Verwendung eines Schutzschalters.

Hinsichtlich des Schutzschalters wird diese Aufgabe durch die Merkmale des Anspruchs 1 und hinsichtlich der Verwendung durch die Merkmale des Anspruchs 15 erfindungsgemäß gelöst. Vorteilhafte Weiterbildungen und Ausgestaltungen sind Gegenstand der Unteransprüche.

Der Schutzschalter dient der Gleichstromunterbrechung und ist insbesondere geeignet, einen Gleichstrom zu unterbrechen. Vorzugsweise ist der Schutzschalter vorgesehen und eingerichtet, einen Gleichstrom zu unterbrechen. Der Schutzschalter ist beispielsweise mittels einer Photovoltaikanlage oder einem Photovoltaikmodul elektrisch kontaktiert und beispielsweise ein Bestandteil einer Photovoltaikanlage oder eines Photovoltaikkraftwerks. In einer Alternative hierzu ist der Schutzschalter ein Bestandteil eines Bordnetzes eines Fahrzeugs, beispielsweise eines Hochvoltbordnetzes, das eine elektrische Spannung größer als 100 Volt, 200 Volt, 300 Volt oder 400 Volt und beispielsweise geringer als 1.000 Volt oder 900 Volt aufweist. Das Fahrzeug ist beispielsweise ein Flugzeug und das Bordnetz dient beispielsweise der Versorgung von Stellantrieben des Flugzeugs. In einer Alternative hierzu ist das Fahrzeug ein Kraftfahrzeug, insbesondere ein Elektro- oder Hybridfahrzeug. Insbesondere ist hierbei der Schutzschalter ein Bestandteil des Bordnetzes, das der Bestromung eines Hauptantriebs des Kraftfahrzeugs dient.

Der Schutzschalter ist insbesondere vorgesehen, elektrische Ströme größer oder gleich 10 Ampere, 100 Ampere, 200 Ampere, 300 Ampere, 500 Ampere oder 600 Ampere zu schalten. Zweckmäßigerweise ist die maximal mit dem Schutzschalter schaltbare elektrische Stromstärke 900 Ampere, 1.000 Ampere, 1.500 Ampere oder 2.000 Ampere. Beispielsweise ist die mit dem Schutzschalter schaltbare elektrische Spannung größer als 10 Volt, 50 Volt, 100 Volt oder 200 Volt. Insbesondere ist die schaltbare elektrische Spannung kleiner als 500 Volt, 600 Volt, 700 Volt oder 1.000V.

Der Schutzschalter weist einen Hauptstrompfad auf, mittels dessen im Betrieb der zu unterbrechende Gleichstrom geführt wird. Der Hauptstrompfad umfasst einen Schalter, mittels dessen bei Betätigung der Stromfluss unterbrochen wird. Hierfür umfasst der Schalter vorzugsweise zwei Kontakte, die mittels geeigneter Ansteuerung des Schalters von einem elektrisch leitenden in einen elektrisch nicht leitenden Zustand überführt werden können. Mit anderen Worten sind die beiden Kontakte elektrisch leitend miteinander verbunden oder aber elektrisch zueinander isoliert, wobei zweckmäßigerweise die Schaltvorgänge reversibel ausgestaltet sind. Der Schalter weist zweckmäßigerweise weitere Bestandteile auf, die nicht Bestandteil des Hauptstrompfads sind, und mittels derer eine Ansteuerung erfolgt, sodass der Stromfluss über den Hauptstrompfad beeinflusst wird. Der Schalter ist beispielsweise ein Halbleiterschalter, insbesondere ein Leistungshalbleiterschalter, wie ein GTO oder ein MOSFET. In einer Alternative hierzu ist der Schalter ein elektromechanischer Schalter, wie ein Relais oder aber weist eine Anzahl derartiger Schaltelemente, wie beispielsweise einen Halbleiterschalter und einen elektromechanischen Schalter auf, die zueinander parallel oder in Reihe geschaltet sind. Beispielsweise umfasst der Schalter zwei in Reihe geschaltete elektromechanische Schalter oder aber einen Schütz in Doppelunterbrecherkonfiguration.

Der Schutzschalter umfasst ferner ein Reed-Relais zur Erfassung des elektrischen Stromflusses, der mit dem Hauptstrompfad geführt wird. Mit anderen Worten ist das Reed-Relais vorgesehen und eingerichtet, den elektrischen Stromfluss über den Hauptstrompfad zu erfassen. Derartige Relais sind vergleichsweise kostengünstig herstellbar, weswegen die Herstellungskosten des Schutzschalters verringert sind. Das Reed-Relais, auch als Reed-Schalter oder Reed-Kontakt bezeichnet, weist bevorzugt ein Glasrohr mit eingeschmolzenen Kontaktzungen aus einem ferromagnetischen Material auf. Die Kontaktzungen sind insbesondere aus einer Eisen-Nickel-Legierung gefertigt und sind vorgesehen und eingerichtet, sich relativ zueinander in Abhängigkeit eines äußeren magnetischen Feldes zu bewegen, wobei bei einer bestimmten Magnetfeldstärke die beiden Kontakte miteinander elektrisch kontaktiert sind. Bei einer weiteren, vorgegebenen Magnetfeldstärke sind die beiden Kontakte elektrisch voneinander isoliert, zweckmäßigerweise zueinander beabstandet. Insbesondere sind die beiden Kontakte innerhalb eines Behälters, wie eines Rohrs, vorzugsweise eine Glasrohrs, angeordnet, der zweckmäßigerweise mit einem Schutzgases, beispielsweise Stickstoff/Wasserstoff, oder mit einem Inertgas befüllt ist. Alternativ ist das Gehäuse vakuumiert.

Der Schalter ist mit dem Reed-Relais gekoppelt, beispielsweise signaltechnisch oder elektrisch. Insbesondere ist das Reed-Relais derart angeordnet, dass der Schaltzustand des Schalters in Abhängigkeit eines mittels des Reed-Relais erfassten Signals verändert wird. Zweckmäßigerweise ist das Reed-Relais derart angeordnet, dass bei einem Überstrom durch den Hauptstrompfad der Schaltzustand des Reed-Relais verändert wird.

Zur Erfassung des Stromflusses ist hierbei keine direkte elektrische Kontaktierung mit dem Hauptstrompfad erforderlich, weswegen das Reed-Relais vorzugsweise galvanisch von dem Hauptstrompfad getrennt ist, sodass ein Kurzschluss des Schutzschalters aufgrund des Reed-Relais im Wesentlichen ausgeschlossen werden kann. Zudem ist für den Betrieb des Reed-Relais kein elektrischer Strom erforderlich, sodass dieses einerseits keine elektrische Energie für den Betrieb benötigt. Andererseits wird dieses bei Betrieb ebenfalls nicht erwärmt, sodass keine vergleichsweise aufwändigen konstruktiven Maßnahmen zu dessen Kühlung ergriffen werden müssen. Ferner erfolgt eine Erfassung einer Änderung des elektrischen Stromflusses innerhalb einer vergleichsweise kurzen Zeit, weswegen der Schutzschalter eine vergleichsweise kurze Auslösecharakteristik aufweist, sodass eine Sicherheit erhöht ist.

Besonders bevorzugt weist der Schalter einen elektromechanischen Schalter auf oder ist mittels diesem gebildet. Hierbei werden die Schaltkontakte mittels einer elektromagnetischen Spule bewegt, die hierfür zweckmäßigerweise an einem der Schaltkontakte angebunden ist. Das Reed-Relais ist vorzugsweise mit der elektrischen Spule des Schalters elektrisch kontaktiert, beispielsweise direkt oder aber mittels weiterer elektrischer Bauteile. Beispielsweise ist das Reed-Relais parallel zu der elektrischen Spule geschaltet. Besonders bevorzugt jedoch ist das Reed-Relais in Reihe mit der elektrischen Spule des Schalters geschaltet, sodass bei einer Änderung des Schaltzustandes des Reed-Relais eine Bestromung der elektrischen Spule verändert wird. Beispielsweise sind hierbei zwischen dem Reed-Relais und der elektrischen Spule lediglich eine elektrische Leitung oder aber weitere elektrische Bauteile geschaltet. Aufgrund der Reihenschaltung ist somit im Wesentlichen unverzüglich nach Änderung des elektrischen Stromflusses über den Hauptstrompfad und folglich einem Schalten des Reed-Relais ein Schalten des Schalters mittels dessen elektrischer Spule ermöglicht, weswegen die Schaltzeit des Schutzschalters weiter verkürzt und eine Sicherheit erhöht ist.

Beispielsweise ist das Reed-Relais nach Art eines einpoligen Einschalters ausgestaltet, mittels dessen lediglich ein elektrischer Stromfluss ein- bzw. ausschaltbar ist. Auf diese Weise ist ein vergleichsweise robuster Schutzschalter bereitgestellt, dessen Herstellungskosten vergleichsweise gering sind. Folglich wird bei einer Betätigung des Reed-Relais entweder die elektrische Spule des Schalters bestromt oder dessen Bestromung unterbrochen. Folglich wird mittels des Schalters ein Schaltvorgang ausgeführt wird, falls mittels des Reed-Relais ein Schaltvorgang durchgeführt wird. Besonders bevorzugt jedoch weist das Reed-Relais eine Wechselschalterkonfiguration auf, die einen Mittelanschluss und einen ersten und einen zweiten Anschluss umfasst, wobei je nach Schaltzustand des Reed-Relais der Mittelanschluss entweder mit dem ersten Anschluss oder mit dem zweiten Anschluss elektrisch kontaktiert ist. Hierbei ist beispielsweise der erste Anschluss im Normalfall elektrisch mit dem Mittelanschluss kontaktiert, und der Mittelanschluss ist zu dem zweiten Anschluss elektrisch isoliert. Mit anderen Worten handelt es sich bei dem ersten Anschluss um "normally closed" (NC) und bei dem zweiten Anschluss um "normally open" (NO). Insbesondere ist das Reed-Relais ein monostabiler Wechsler oder zumindest nach Art eines monostabilen Wechslers aufgebaut. In einer Alternative ist das Reed-Relais ein bistabiler Wechsler oder zumindest nach Art eines bistabilen Wechslers aufgebaut.

Bevorzugt ist der Mittelanschluss elektrisch mit der elektrischen Spule des Schalters kontaktiert, sodass diese, je nach Schaltzustand, entweder mit dem ersten oder mit dem zweiten Anschluss elektrisch kontaktiert ist. Beispielsweise ist der Mittelanschluss direkt mit der elektrischen Spule kontaktiert oder es befinden sich weitere elektrische Bauteile des Schutzschalters zwischen diesen und sind folglich mit dem Mittelanschluss und mit der elektrischen Spule in Reihe geschaltet. Zumindest jedoch befinden sich keine weiteren Bestandteile des Reed-Relais zwischen dem Mittelanschluss und der elektrischen Spule. Insbesondere befindet sich der Schalter lediglich bei bestromter elektrischer Spule im elektrisch leitfähigen Zustand, ist also stromführend. Folglich wird bei einem Schaltvorgang des Reed-Relais die in der Spule gespeicherte elektrische Energie mittels eines Stromflusses zu dem zweiten Anschluss abgebaut, weswegen die Schaltzeit weiter verkürzt ist.

Zweckmäßigerweise ist hierfür ein erster Kondensator zu der elektrischen Spule und dem Reed-Relais parallel geschaltet. Insbesondere ist der erste Kondensator mit dem zweiten Anschluss des Reed-Relais elektrisch kontaktiert, der im Normalzustand von dem Mittelanschluss elektrisch isoliert ist. Folglich ist bei einem Schalter des Reed-Relais mittels des ersten Kondensators und der elektrischen Spule des Schalters ein Schwingkreis gebildet, mittels dessen die in der elektrischen Spule gespeicherte elektrische Energie abgebaut wird. Zweckmäßigerweise ist der erste Kondensator nicht geladen, wenn der Schutzschalter sich im elektrisch leitfähigen Zustand befindet (Normalzustand), weswegen einerseits eine mögliche Betriebsdauer des ersten Kondensators erhöht und andererseits die Möglichkeit eines elektrischen Kurzschlusses unterbunden ist.

Vorzugsweise ist zwischen dem ersten Kondensator und der elektrischen Spule eine Diode geschaltet, insbesondere zwei Dioden, wobei hierbei zweckmäßigerweise zwischen jeder Elektrode des ersten Kondensators und der elektrischen Spule eine der Dioden angeordnet ist, deren Durchlassrichtung vorzugsweise in gleicher Richtung gerichtet ist. Folglich wird bei einem Schaltvorgang des Reed-Relais ein einzelner Schwingvorgang ausgeführt, bei dem aufgrund der Induktivität der elektrischen Spule deren gespeicherte elektrische Energie im Wesentlichen vollständig auf den ersten Kondensator umgeladen wird. Ein Entladen des ersten Kondensators ist aufgrund der Diode unterbunden, weswegen eine erneute Bestromung der elektrischen Spule ausgeschlossen werden kann, was zu einem unbeabsichtigten erneuten Schließen des Schalters führen würde.

Vorzugsweise umfasst der Schutzschalter eine Treiberspule, also eine weitere elektrische Spule. Die Treiberspule ist mit dem ersten Kondensator gekoppelt. Insbesondere wird die Treiberspule mittels des ersten Kondensators bestromt. Vorzugsweise ist in Reihe zu der Treiberspule eine Diode geschaltet, mittels derer ein Abbauen der auf die Treiberspule übertragenen elektrischen Energie zurück zu dem ersten Kondensator unterbunden wird. Zweckmäßigerweise ist die Treiberspule elektrisch mit einem zweiten Kondensator kontaktiert. Beispielsweise ist die Treiberspule parallel zum zweiten Kondensator geschaltet. Geeigneterweise jedoch ist der zweite Kondensator in Reihe zu der Treiberspule geschaltet, sodass mittels des zweiten Kondensators eine Bestromung der Treiberspule erfolgt oder zumindest erfolgen kann. Beispielsweise ist der zweite Kondensator elektrisch mit dem ersten Kondensator kontaktiert oder signaltechnisch mit diesem verbunden. Zweckmäßigerweise sind die beiden Kondensatoren derart verschaltet, dass bei einer Änderung des Ladungszustands des ersten Kondensators eine Bestromung der Treiberspule erfolgt oder jedoch zumindest eine Bestromung der Treiberspule verändert wird. Folglich wird bei einem Schaltvorgang des Reed-Relais die Bestromung der Treiberspule verändert und/oder insbesondere der Ladungszustand des zweiten Kondensators. Aufgrund der Treiberspule ist eine Entladung des ersten Kondensators ermöglicht, sodass nach erfolgtem Auslösen des Schutzschalters die in dem ersten Kondensator gespeicherte elektrische Energie abgebaut wird, was eine Sicherheit erhöht. Insbesondere ist mittels der Treiberspule ein Bauteil angetrieben und somit die in der Treiberspule gespeicherte Energie abgebaut.

Geeigneterweise ist die Treiberspule mittels eines Schaltelements mit dem zweiten Kondensator elektrisch kontaktiert. Mit anderen Worten ist zwischen dem zweiten Kondensator und der Treiberspule das Schaltelement angeordnet. Beispielsweise ist das Schaltelement ein Halbleiterschalter, insbesondere ein Thyristor. Das Gate des Halbleiterschalters ist vorzugsweise mit dem ersten Kondensator gekoppelt, beispielsweise elektrisch oder signaltechnisch, sodass bei einer Änderung des Ladungszustandes das Schaltelement schaltet, sodass die Treiberspule mittels des zweiten Kondensators bestromt wird. Mit anderen Worten ist die Treiberspule mittels des Thyristors mit dem ersten Kondensator gekoppelt. Zweckmäßigerweise ist im Normalzustand, also wenn der Schutzschalter im elektrisch leitenden Zustand ist, der zweite Kondensator geladen, sodass bei einem Überschreiten des Ladungszustands des ersten Kondensators über eine mittels des Thyristors vorgegebenen Schwelle innerhalb einer vergleichsweise kurzen Zeitspanne die Bestromung der Treiberspule mit einer vergleichsweise großen elektrischen Stromfluss erfolgt.

In einer Ausführungsform der Erfindung ist die Treiberspule mittels eines Kopplers mit dem ersten Kondensator gekoppelt. Insbesondere ist der Koppler ein galvanisch trennender Koppler, sodass die Treiberspule galvanisch von dem ersten Kondensator und somit auch von dem Reed-Relais getrennt ist. Beispielsweise ist bei Betrieb mittels des Kopplers ein Impulsübertrag trotz galvanischer Trennung ermöglicht. Zweckmäßigerweise ist der Koppler ein Übertrager oder insbesondere ein Optokoppler, der eingangsseitig insbesondere ein Leuchtdiode (LED) und/oder ausgangsseitig eine Photodiode, einen Phototransistor und/oder einen Diac aufweist.

Zweckmäßigerweise ist hierbei der zweite Kondensator mit dem Hauptstrompfad elektrisch kontaktiert. Insbesondere ist eine Elektrode des zweiten Kondensators elektrisch direkt mit dem Hauptstrompfad kontaktiert, insbesondere einem der Anschlüsse des Schutzschalters. Vorzugsweise ist der zweiten Elektrode des zweiten Kondensators mit einem weiteren Anschluss des Schutzschalters elektrisch kontaktiert, beispielsweise direkt oder aber mittels weiterer Bauelemente. Zweckmäßigerweise liegt bei Betrieb des Schutzschalters die elektrische Spannung des Bordnetzes an dem zweiten Kondensator an, sofern der Schutzschalter ein Bestandteil des Bordnetzes ist. Insbesondere ist der zweite Kondensator hierfür geeignet angeordnet. Infolgedessen ist bei Betrieb mittels des zweiten Kondensators eine vergleichsweise große elektrische Energiemenge gespeichert, sodass bei einem Schalten des Reed-Relais zur Bestromung der Treiberspule nicht nur lediglich die innerhalb der elektrischen Spule des Schalters gespeicherte Energie, die mittels des ersten Kondensators auf die Treiberspule übertragen wird, sondern eine im Gegensatz hierzu erhöhte Energiemenge bereitsteht, weswegen das etwaige, mittels der Treiberspule angetriebene Bauteil vergleichsweise schnell beschleunigt wird. Aufgrund des Kopplers ist hierbei der zweite Kondensator galvanisch von dem Reed-Relais getrennt, was eine Sicherheit erhöht.

Vorzugsweise ist der Koppler mit dem Schaltelement, insbesondere mit dem Gate des Halbleiterschalters, insbesondere des Thyristors, sofern diese vorhanden sind, elektrisch kontaktiert, sodass mittels des Thyristors die Kopplung zwischen der Treiberspule und dem Koppler erstellt ist. Zweckmäßigerweise ist der Koppler parallel zu dem ersten Kondensator geschaltet.

Insbesondere ist eine Elektrode des zweiten Kondensators mittels eines dritten Kondensators mit dem Hauptstrompfad elektrisch kontaktiert. Mit anderen Worten sind der zweite und dritte Kondensator in Reihe geschaltet, wobei der dritte Kondensator zwischen dem zweiten Kondensator und dem Hauptstrompfad angeordnet ist. Auf diese Weise ist eine galvanische Trennung zwischen dem zweiten Kondensator und dem Hauptstrompfad realisiert, was eine Sicherheit weiter erhöht. Zudem liegt nicht die vollständige an dem Hauptstrompfad anliegende elektrische Spannung an dem zweiten Kondensator an, weswegen dieser kleiner dimensioniert werden kann, was Herstellungskosten reduziert. In einer Alternative hierzu wird eine anderweitige galvanische Entkopplung zwischen dem zweiten Kondensator und dem Hauptstrompfad herangezogen.

In einer weiteren Alternative erfolgt die Kopplung der Treiberspule mit dem ersten Kondensator mittels einer elektrischen Parallelschaltung. Mit anderen Worten ist die Treiberspule parallel zu dem ersten Kondensator geschaltet und mit diesem elektrisch kontaktiert. Hierbei ist vorzugsweise das Schaltelement oder aber ein weiteres Schaltelement in Reihe zu der Treiberspule geschaltet, sodass mittels Betätigen des Schaltelements, wie eines Halbleiterschalters, wie z.B. eines Transistors oder eines Thyristors, die Bestromung der Treiberspule mittels des ersten Kondensators erfolgt. Auf diese Weise wird die in dem ersten Kondensator gespeicherte elektrische Energie mittels der Treiberspule abgebaut. Insbesondere ist hierbei der zweite Kondensator, sofern dieser vorhanden ist, parallel zu dem ersten Kondensator geschaltet, wobei zweckmäßigerweise mittels einer Diode ein Stromfluss von dem zweiten Kondensator zu dem ersten Kondensator unterbunden ist.

Beispielsweise umfasst der Schutzschalter einen Nebenstrompfad, der das Reed-Relais und die elektrische Spule des Schalters aufweist. Sofern der Schutzschalter ein Bestandteil des Bordnetzes des Kraftfahrzeugs ist, wird zweckmäßigerweise ein Hochvoltbordnetz des Kraftfahrzeugs mittels des Hauptstrompfads abgesichert. Der Nebenstrompfad ist hierbei vorzugsweise ein Bestandteil eines Niedervoltbordnetzes, das beispielsweise 12 Volt, 24 Volt oder 42 Volt aufweist. Insbesondere ist die elektrische Spannung und/oder der elektrische Strom des Nebenstrompfades geringer als der jeweilige korrespondierende Wert des Hauptstrompfads. Infolgedessen wird mittels des Schalters nicht der mittels der elektrischen Spule des Schalters geführte Stromfluss unterbrochen. Folglich führen bei Betrieb die elektrische Spule des Schalters sowie das Reed-Relais eine vergleichsweise geringe elektrische Spannungen/elektrische Strömungen, wobei mittels des Schutzschalters auch vergleichsweise große, mittels des Hauptstrompfads geführte elektrische Ströme/elektrische Spannungen geschaltet werden können.

In einer alternativen Ausführungsform der Erfindung umfasst der Schutzschalter eine Steuereinheit, die beispielsweise mittels elektrischer und/oder elektronischer Bauteile erstellt ist. Beispielsweise umfasst die Steuereinheit einen Mikroprozessor. Der Reed-Sensor (Reed-Relais) ist signaltechnisch mit der Steuereinheit gekoppelt, die wiederum signaltechnisch mit dem Schalter verbunden ist. Folglich wird bei Erkennen eines Fehlerfalls zunächst mittels des Reed-Schalters (Reed-Relais) ein Signal an die Steuereinheit übermittelt, welches mittels der Steuereinheit ausgewertet wird. Sofern der mittels des Reed-Relais erfasste elektrische Stromfluss einen Schwellwert überschreitet, wird mittels der Steuereinheit ein Steuersignal für den Schalter erstellt, sodass der Hauptstrompfad elektrisch unterbrochen wird. Der Schalter ist hierbei beispielsweise ein Halbleiterschalter, dessen Gate mit der Steuereinheit beispielsweise elektrisch kontaktiert ist. Beispielsweise ist der Halbleiterschalter ein Leistungshalbleiterschalter, wie ein GTO oder MOSFET. Alternativ hierzu ist der Schalter ein elektromechanischer Schalter, wie ein Relais oder aber weist eine Anzahl derartiger Schaltelemente, wie beispielsweise einen Halbleiterschalter und einen elektromechanischen Schalter auf, die zueinander parallel oder in Reihe geschaltet sind. Beispielsweise umfasst der Schalter zwei in Reihe geschaltete elektromechanische Schalter oder aber einen Schütz in Doppelunterbrecherkonfiguration. Zweckmäßigerweise umfasst die Steuereinheit einen Energiespeicher, beispielsweise eine Batterie oder einen Kondensator, sodass auch bei einem Ausfall einer externen Energieversorgung für die Steuereinheit zumindest für einen bestimmten Zeitraum eine Überwachung ermöglicht ist.

Der Schalter weist vorzugsweise einen Anker auf, der zumindest teilweise innerhalb der elektrischen Spule angeordnet ist. Der Anker ist mit zumindest einem der Schaltkontakte des Schalters mechanisch gekoppelt, insbesondere an diesen angebunden, vorzugsweise an diesem befestigt. Bei einer Änderung der Bestromung der elektrischen Spule wird folglich der Anker innerhalb der elektrischen Spule bewegt. Beispielsweise ist der Anker und/oder der Schaltkontakt federbelastet. Die Federkraft wird mittels der magnetischen Kraft aufgehoben, die mittels der elektrischen Spule bereitgestellt wird, sofern diese bestromt wird. Folglich wird bei einer Unterbrechung der Bestromung der elektrischen Spule der Schaltkontakt aufgrund der wirkenden Federkraft bewegt, sodass der Schalter in einen geöffneten Zustand überführt wird. Auf diese Weise ist die Sicherheit erhöht.

Zweckmäßigerweise ist ein Hilfsantrieb mit dem Anker gekoppelt. Der Hilfsantrieb wird zweckmäßigerweise lediglich dann aktiviert, falls das Reed-Relais geschaltet wird. Folglich wird bei einem Fehlerfall/Überstrom der Anker vergleichsweise schnell bewegt, sodass eine Schaltzeit des Schutzschalters verkürzt ist. Zweckmäßigerweise ist die Treiberspule ein Bestandteil des Hilfsantriebs, sofern die Treiberspule vorhanden ist. Folglich wird die in der elektrischen Spule gespeicherte elektrische Energie mittels des Hilfsantriebs abgebaut. Folglich wird der Anker aufgrund der bereits im Schutzschalter gespeicherten elektrischen Energie beschleunigt. Besonders bevorzugt ist hierbei der zweite Kondensator vorhanden, sodass eine mittels des Hilfsantriebs aufgebrachte Kraft vergleichsweise groß ist.

Zweckmäßigerweise umfasst der Hilfsantrieb einen Wirbelstromantrieb. Der Wirbelstromantrieb weist eine zweite elektrische Spule auf, an der zweckmäßigerweise im elektrisch leitenden Zustand des Schutzschalters ein elektrischer Leiter mechanisch anliegt, wobei zwischen diesen vorzugsweise eine Isolationsschicht angeordnet ist. Der elektrische Leiter ist zweckmäßigerweise mit dem Anker gekoppelt oder aber mittels eines weiteren Elements gekoppelt. Bei einer Bestromung der zweiten elektrischen Spule, die insbesondere die Treiberspule ist, wird folglich aufgrund der Inhomogenität des Magnetfelds bei dessen Erstellung und der somit induzierten Wirbelströme innerhalb des elektrischen Leiters der elektrisch Leiter selbst von der zweiten elektrischen Spule abgestoßen. Hierbei ist beispielsweise der elektrische Leiter, im Weiteren auch als Betätigungselement bezeichnet, mechanisch direkt mit dem Anker gekoppelt, sodass der Hilfsantrieb direkt auf den Anker wirkt.

In einer Alternative hierzu umfasst der Hilfsantrieb ein mechanisches Federelement, das mittels eines biegeschlaffen Verbindungselements an dem Anker angebunden ist. Das Verbindungselement ist beispielsweise ein Stahlband, oder aus einem Gummi, einem Seil oder dergleichen gefertigt. Folglich ist mittels des Hilfsantriebs lediglich eine Kraftausübung in eine Richtung ermöglicht, weswegen der Anker auch ohne Betätigung des Hilfsantriebs geschaltet werden kann. Zweckmäßigerweise ist an dem Verbindungselement ein mechanisches Federelement, wie eine Schraubenfeder oder eine gewundene Torsionsfeder angebunden. Das Federelement ist beispielsweise mittels einer Verklinkung in einem gespannten Zustand gehalten, insbesondere mit dem Betätigungselement des Wirbelstromantriebs, sofern dieses vorhanden ist. Bei einem Auslösen des Hilfsantriebs wird folglich die Verklinkung gelöst und mittels des Federelements über das Verbindungselement der Anker beschleunigt. Zweckmäßigerweise ist das mechanische Federelement gespannt, sofern die Verklinkung besteht. Mit anderen Worten ist in dem mechanischen Federelement mechanische Energie gespeichert. Folglich ist auch bei einer Bestromung des Hilfsantriebs mit einer vergleichsweise geringen Energie eine vergleichsweise große Kraftausübung auf den Anker ermöglicht, wofür bei Montage das mechanische Federelement vorgespannt wird.

Zweckmäßigerweise umfasst der Hauptstrompfad eine Stromschiene, die beispielsweise mittels einer Kupferschiene erstellt ist. Die Stromschiene ist zweckmäßigerweise außenseitig elektrisch isoliert, was einen Kurzschluss vermeidet. Die Stromschiene ist umfangsseitig zumindest abschnittsweise von einem Träger umgeben, der insbesondere formschlüssig an der Stromschiene anliegt. Der Träger ist zweckmäßigerweise aus einem ferromagnetischen Material gefertigt und beispielsweise auf die Stromschiene aufgesteckt. Mittels des Trägers wird folglich das die Stromschiene umgebende Magnetfeld geformt. Der Träger weist eine Aussparung auf, innerhalb derer das Reed-Relais positioniert ist. Die Aussparung ist insbesondere nutförmig ausgestaltet, wobei die Öffnung der Nut zweckmäßigerweise mittels der Stromschiene verschlossen ist. Alternativ hierzu ist die Aussparung nach Art eines Spalts ausgestaltet, so dass der Träger aufgrund des Spalts nicht vollständig um die Stromschiene umlaufend ausgestaltet ist, sondern zwei zueinander mittels des Spalts beabstandete Enden aufweist. Infolgedessen ist das Reed-Relais im Wesentlichen lediglich mittels der Magnetfeldlinien durchsetzt, die aufgrund des mittels der Stromschiene geführten elektrischen Stromflusses bedingt sind. Folglich wird mittels des Reed-Relais aufgrund des Trägers aus einem ferromagnetischen Material im Wesentlichen lediglich das Magnetfeld erfasst, das mittels des elektrischen Stromflusses erzeugt wird. Externe weitere Magnetfelder hingegen werden mittels des Reed-Relais nur in vergleichsweise geringem Maße erfasst, weswegen die Anzahl an Fehlauslösungen vergleichsweise gering ist.

Zweckmäßigerweise ist das Reed-Relais innerhalb der Aussparung gehalten, wobei zwischen dem Träger und dem Reed-Relais ein Luftspalt gebildet wird. Mittels des Luftspalts ist es hierbei ermöglicht, die Stromstärke des über den Hauptstrompfad geführten elektrischen Stromflusses einzustellen, ab der ein Schaltvorgang des Reed-Relais ausgelöst wird. Mit anderen Worten wird mittels des Luftspalts die Stärke des Magnetfelds, das das Reed-Relais durchsetzt, als Bruchteil des den Träger durchsetzenden Magnetfelds eingestellt. Infolgedessen ist mittels einer Veränderung des Trägers eine Einstellung des Schutzschalters (Auslöseschwelle) ermöglicht, insbesondere mittels Einstellung des Luftspalts. Ein Austausch des Reed-Relais ist jedoch nicht erforderlich. Folglich wird bei der Herstellung des Schutzschalters lediglich eine einzige Art von Reed-Relais benötigt, unabhängig von der gewünschten Einsatzbedingung.

Zweckmäßigerweise wird das Reed-Relais innerhalb der Aussparung mittels eines Halters gehalten, sodass der Luftspalt auch bei einer Erschütterung des Schutzschalters im Wesentlichen konstant ist. Hierbei wird das Reed-Relais zumindest abschnittsweise form- und/oder kraftschlüssig von dem Halter umgeben, der zumindest abschnittsweise innerhalb der Aussparung angeordnet ist. Der Halter selbst ist zweckmäßigerweise aus einem para- oder diamagnetischen Material gefertigt. Insbesondere ist die magnetische Permeabilität des Materials des Halters im Wesentlichen zwischen 0,9 und 1,1 und zweckmäßigerweise im Wesentlichen gleich 1, sodass das mittels des Trägers geführte Magnetfeld mittels des Halters im Wesentlichen nicht beeinflusst wird.

Zur Absicherung eines Bordnetzes eines Fahrzeugs, wie eines Kraftfahrzeugs oder eines Flugzeugs, wird ein Schutzschalter verwendet, der einen Hauptstrompfad mit einem Schalter und ein Reed-Relais zur Erfassung eines elektrischen Stromflusses über den Hauptstrompfad aufweist. Der Schalter ist mit dem Reed-Relais gekoppelt, beispielsweise elektrisch oder signaltechnisch. Das Bordnetz ist besonders bevorzugt ein Hochvoltbordnetz, mittels dessen ein elektrischer Strom mit einer Stromstärke größer als 10 Ampere, 20 Ampere, 50 Ampere, 100 Ampere oder 200 Ampere geführt wird. Insbesondere ist die maximal von dem Hochvoltbordnetz getragene elektrische Stromstärke kleiner als 2.000 Ampere, 1.800 Ampere, oder 1.500 Ampere. Insbesondere ist die elektrische Spannung des Hochvoltbordnetzes größer als 100 Volt, 200 Volt, 300 Volt oder 350 Volt. Zweckmäßigerweise ist die elektrische Spannung des Hochvoltbordnetzes geringer als 1.000 Volt, 800 Volt oder 600 Volt.

Nachfolgend werden Ausführungsbeispiele der Erfindung anhand einer Zeichnung näher erläutert. Darin zeigen:
- Fig. 1: schematisch vereinfacht ein Kraftfahrzeug mit einem einen Schutzschalter aufweisenden Hochvoltbordnetz,
- Fig. 2: in einer Schnittdarstellung eine Stromschiene des Schutzschalters und ein Reed-Relais zur Erfassung eines elektrischen Stromflusses über die Stromschiene, das innerhalb einer Aussparung eines Trägers angeordnet ist,
- Fig. 3: in Draufsicht den auf die Stromschiene aufgesteckten Träger,
- Fig. 4: einen innerhalb einer elektrischen Spule angeordneten Anker eines Schalters des Schutzschalters, der mit einer ersten Ausführungsform eines Hilfsantriebs gekoppelt ist,
- Fig. 5: schematisch eine weitere Ausführungsform des mit dem Anker gekoppelten Hilfsantriebs,
- Fig. 6: in einer Blockdarstellung eine erste Ausführungsform des Schutzschalters, und
- Fig. 7 bis 9: jeweils als Schaltplan unterschiedliche Ausgestaltungen des Schutzschalters.

Einander entsprechende Teile sind in sämtlichen Figuren mit den gleichen Bezugszeichen versehen.

Sofern einzelne Bauteil als erstes, zweites, drittes... Bauteil bezeichnet werden, dient dies insbesondere lediglich der Bezeichnung des jeweiligen Bauteils. Insbesondere impliziert dies nicht das Vorhandensein einer bestimmten Anzahl von Bauteilen.

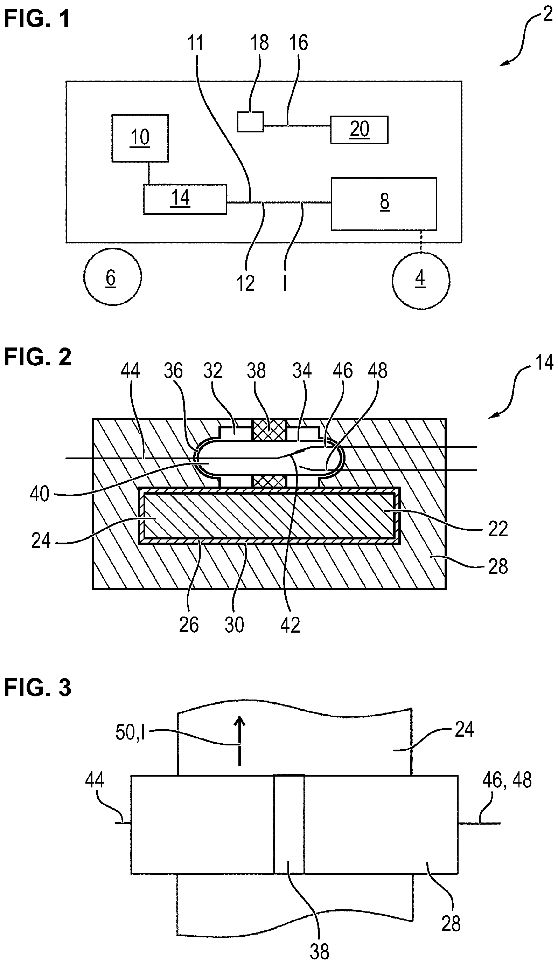

In Fig. 1 ist schematisch vereinfacht ein Kraftfahrzeug 2 mit Antriebsrädern 4 sowie nicht angetriebenen Rädern 6 dargestellt. Die Antriebsräder 4 sind mit einem Elektromotor 8 gekoppelt, der einen nicht näher dargestellten Umrichter aufweist. Die Bestromung des Umrichters/Elektromotors 8 erfolgt mittels einer Hochvoltbatterie 10, mittels derer eine elektrische Energie bereitgestellt wird, wobei zwischen den beiden Polen der Hochvoltbatterie eine elektrische Spannung von 400 Volt anliegt. Die Hochvoltbatterie 10 ist mittels einer elektrischen Leitung 11 mit dem Umrichter/Elektromotor 8 gekoppelt, wobei mittels der elektrischen Leitung 11 ein elektrischer Stromfluss I von bis zu 1.000 Ampere geführt wird. Die Hochvoltbatterie 10, die elektrischen Leitung 11 und der Umrichter/Elektromotor 8 sind Bestandteile eines Hochvoltbordnetzes 12.

Zur Absicherung des Hochvoltbordnetzes 12 weist dieses einen Schutzschalter 14 auf, der bei einem Überstrom, also bei einem elektrischen Stromfluss I, der 1.000 Ampere überschreitet, und der beispielsweise aufgrund eines Kurzschlusses innerhalb des Umrichters/Elektromotors 8 hervorgerufen wird, auslöst und folglich die Hochvoltbatterie 10 elektrisch von dem Umrichter/Elektromotor 8 trennt. Das Kraftfahrzeug 2 weist ferner ein Niedervoltbordnetz 16 mit einer Niedervoltbatterie 18 auf, zwischen deren jeweiligen elektrischen Polen eine elektrische Spannung von 12 Volt oder 48 Volt anliegt. Das Niedervoltbordnetz 16 umfasst ferner eine Anzahl an Stellantrieben 20, mittels derer Verstellteile, wie z.B. Fensterscheiben oder aber Sitze, elektrisch verstellt werden können.

Der Schutzschalter 14 weist einen Hauptstrompfad 22 mit einer Stromschiene 24 auf, die in Fig. 2 in einem Querschnitt und in Fig. 3 in einer Draufsicht gezeigt ist. Die im Wesentlichen quaderförmige Stromschiene 24 weist einen Kupferkern, also einen aus einem Kupfer erstellten Kern, auf, der außenseitig von einer Isolationsschicht 26 aus einem Kunststoff umgeben ist, sodass ein elektrischer Kurzschluss mit weiteren Komponenten des Schutzschalters 14 im Wesentlichen ausgeschlossen werden kann. Die Stromschiene 24 ist von einem Träger 28 umgeben, der ebenfalls im Wesentlichen quaderförmig ausgestaltet ist. Der Träger 28 ist aus einem ferromagnetischen Material gefertigt, und weist eine zentrale Öffnung 30 auf, innerhalb derer die Stromschiene 24 formschlüssig angeordnet ist. Ferner umfasst der Träger 28 eine parallel zur Stromschiene 24 verlaufende nutförmige Aussparung 32, deren Öffnung mittels der Stromschiene 24 verschlossen ist. Mit anderen Worten sind die Aussparung 32 und die Öffnung 30 miteinander verbunden. Innerhalb der Aussparung 32 ist ein Reed-Relais 34 angeordnet, welches jedoch von dem Träger 28 unter Ausbildung eines Luftspalts 36 beabstandet ist. Mit anderen Worten liegt das Reed-Relais 34 nicht an dem Träger 28 an. Das Reed-Relais 34 wird mittels eines Halters 38 innerhalb der Aussparung 32 gehalten, sodass der Luftspalt 36 auch bei einer Erschütterung des Schutzschalters 14 bestehen bleibt. Der Halter 38 ist aus einem Material gefertigt, welches eine magnetische Permeabilität µᵣ=1 aufweist, und ist endseitig beispielsweise an der Stromschiene 24 abgestützt.

Das Reed-Relais 34 weist einen innerhalb eines Glasrohrs 40 angeordneten Schaltkontakt 42 auf, der mit einem Mittelanschluss 44 elektrisch kontaktiert ist. Der Schaltkontakt 42 ist aus einer Nickel-Eisen-Legierung erstellt und zwischen einem ersten Anschluss 46 und einem zweiten Anschluss 48 verschwenkbar. Das Glasrohr 40 selbst ist mit Stickstoff gefüllt. Falls der elektrische Stromfluss I besteht und folglich ein Stromfluss in eine Richtung 50 besteht, die senkrecht zu dem in Fig. 2 gezeigten Querschnitt ist, bildet sich um die Stromschiene 24 ein Magnetfeld aus, welches mittels des Trägers 28 durch das Reed-Relais 34 geleitet wird. In Abhängigkeit der Stärke des Magnetfelds wird der Schaltkontakt 42 verschwenkt, sodass der Mittelanschluss 44 entweder mit dem ersten Anschluss 46 oder dem zweiten Anschluss 48 elektrisch kontaktiert ist. Folglich wird mittels des Reed-Relais 34 erfasst, ob der elektrische Stromfluss I einen bestimmten Wert überschreitet, wobei für die Erfassung, also den Betrieb des Sensors selbst, keine elektrische Energie benötigt wird.

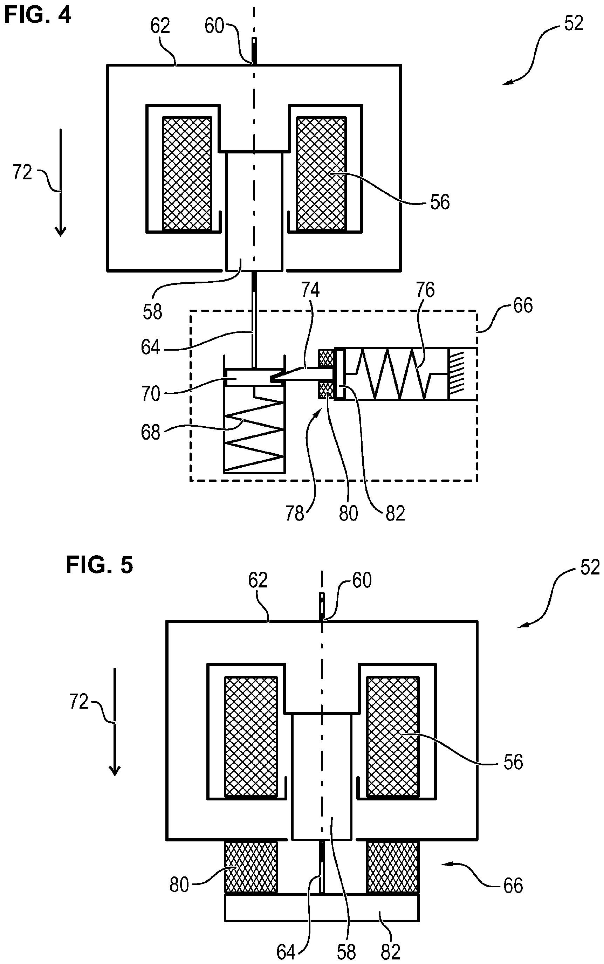

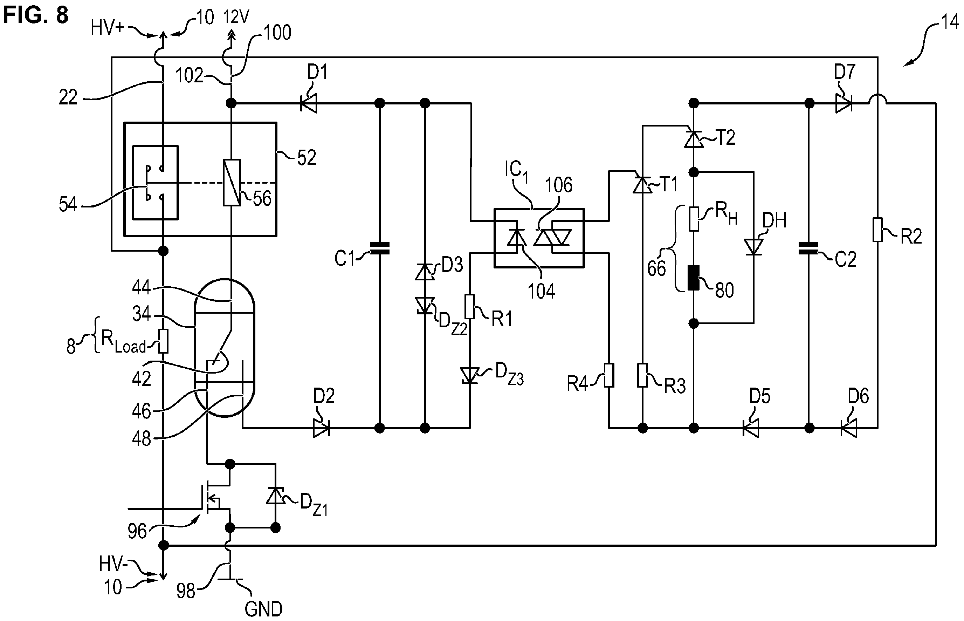

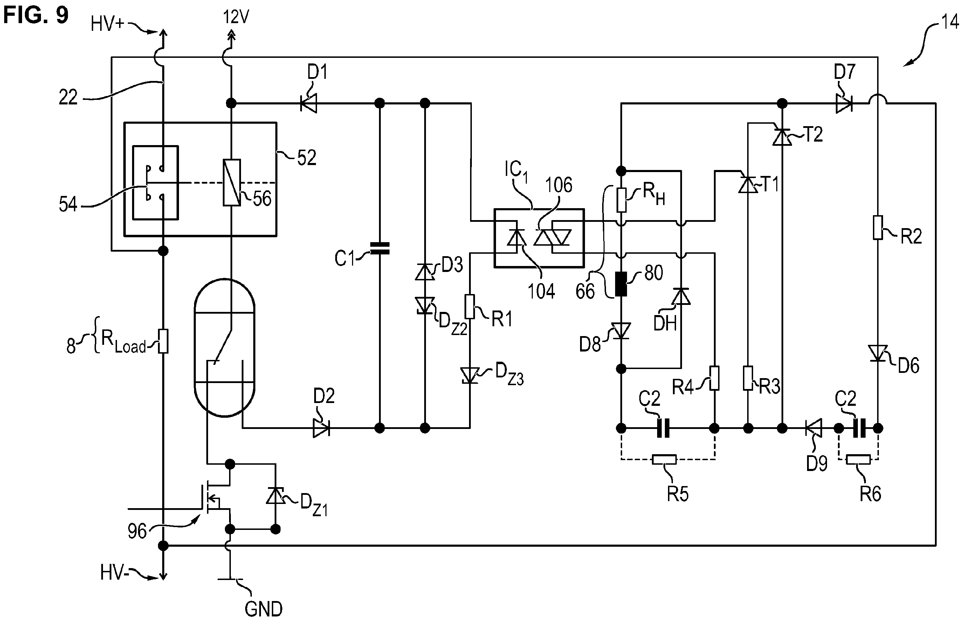

In Fig. 4 ist ausschnittsweise ein Schalter 52 des Schutzschalters 14 dargestellt, der nach Art eines elektromechanischen Schalters ausgebildet ist, und beispielsweise eine Kontaktbrücke 54 zur Doppelunterbrechung umfasst (Fig. 8,9). Der Schalter 52 weist eine elektrische Spule 56 auf, die in einer Schnittdarstellung entlang der Längsachse dargestellt ist. Innerhalb der Spule 56 ist ein Anker 58 aus einem ferromagnetischen Material oder einem Permanentmagneten positioniert, der endseitig unter Ausbildung einer Kupplungsstelle 60 aus der elektrischen Spule und einem diese umgebenden Joch 62 herausragt, das aus einem ferromagnetischen Material gefertigt ist, wie Eisen, und beispielsweise aus einem massiven Eisenkern gefertigt oder geblecht ausgestaltet ist, also als ein Blechpaket mit einzelnen gegeneinander elektrisch isolierten Blechen ausgeführt ist, insbesondere aus einzelnen Traffoblechen. An der Kupplungsstelle 60 ist die Kontaktbrücke 54 angebunden.

An dem gegenüberliegenden Ende des Ankers 58 ist ein biegeschlaffes Verbindungselement 64 in Form eines Stahlbandes angebunden, mittels dessen ein Hilfsantrieb 66 mit dem Anker 58 verbunden ist. Der Hilfsantrieb 66 weist ein mechanisches Federelement 68 in Form einer Springfeder auf, an der endseitig ein Endelement 70 angebunden ist, an dem das Verbindungselement 64 befestigt ist. Mittels des mechanischen Federelements 68 wird über das Verbindungselement 64 eine Kraft auf den Anker 58 in eine Öffnungsrichtung 72 ausgeübt. Bei einem Bewegen des Ankers 58 in Öffnungsrichtung 72 wird der elektrische Stromfluss I über den Hauptstrompfad 22 unterbrochen und beispielsweise die Kontaktbrücke 54 in eine geöffnete Stellung bewegt.

Das Endelement 70 ist mit einem Halteelement 74 verklinkt, sodass trotz aufgrund der gespannten mechanischen Federelement 68 das Endelement 70 in einer vorher definierten Position verbleibt. Aufgrund des biegeschlaffen Verbindungselements 64 ist eine Bewegung des Ankers 58 in Öffnungsrichtung 72 zur Unterbrechung des Stromflusses ermöglicht, wobei der Hilfsantrieb 66 nicht aktiviert ist. Bei Aktivierung des Hilfsantriebs 66 und einem Lösen des Halteelements 64 aus dem Endelement 70 und folglich einer Aufhebung der Verklinkung jedoch wird aufgrund des Verbindungselements 64 der Anker 58 in Öffnungsrichtung 72 bewegt, wobei das mechanische Federelement 68 entspannt wird. Das Halteelement 74 wird mittels eines zweiten mechanischen Federelements 76 gegen das Endelement 70 und die dort gebildete Aussparung gepresst, sodass die Verklinkung besteht.

Zwischen dem Halteelement 74 und dem zweiten mechanischen Federelement 76 ist ein Wirbelstromantrieb 78 mit einer Treiberspule 80 und einem Betätigungselement 82 positioniert, wobei das Betätigungselement 82 endseitig an das zweite mechanische Federelement 76 angebunden ist. Das Betätigungselement 82 ist aus einem elektrisch leitfähigen Material erstellt, wie beispielsweise Aluminium und weist eine scheibenförmige Form mit beispielsweise kreisrundem Querschnitt auf. Bei einer Bestromung der Treiberspule 80 wird folglich das Betätigungselement 82 entgegen der Federkraft des zweiten mechanischen Federelements 76 bewegt und somit das Halteelement 74 von dem Endelement 70 entfernt, was deren Eingriff miteinander löst. Infolgedessen wird das Endelement 70 aufgrund des mechanischen Federelements 68 in Öffnungsrichtung 72 bewegt und folglich auch der mit diesem mittels des Verbindungselements 64 gekoppelte Anker 58.

In Fig. 5 ist eine weitere Ausgestaltungsform des Hilfsantriebs 66 dargestellt, der mit dem Anker 58 des Schalters 52 gekoppelt ist, der - wie auch bei der vorhergehenden Ausführungsform - innerhalb der elektrischen Spule 56 angeordnet ist. Die elektrische Spule 56 selbst ist wiederum mittels des Jochs 62 umgeben. Auch weist der Anker 58 an dessen einen Längsseite die Kupplungsstelle 60 auf. An dem verbliebenen Ende ist ebenfalls das Verbindungselement 64 befestigt, das biegeschlaff oder jedoch auch starr ausgestaltet sein kann. Das Verbindungselement 64 ist an dem Betätigungselement 82 des Hilfsantriebs 66 angebunden, der prinzipiell gleichartig zu dem vorherigen Ausführungsbeispiel ausgestaltet ist. Auch hier ist das Betätigungselement 82 scheibenförmig mit kreisrundem Querschnitt ausgestaltet und aus einem ferromagnetischen Material erstellt, wie Aluminium. Im geschlossenen Zustand des Schalters liegt das Betätigungselement 82 an der Treiberspule 80 lose an, die jedoch abweichend zu dem vorhergehenden Ausführungsbeispiel für einen elektrischen Strom mit einer erhöhten elektrischen Stromstärke ausgelegt ist, wofür die Treiberspule 80 aus einem vergleichsweise dicken Draht gewickelt ist. Zudem ist die Treiberspule 80 an dem Joch 62 befestigt.

Bei Bestromung der Treiberspule 80 wird das Betätigungselement 82 von diesem entfernt, und aufgrund des Verbindungselements 64 wird der Anker 58 aus der elektrischen Spule 56 in Öffnungsrichtung 72 gezogen. Sofern der Schalter 52 im Normalbetrieb betätigt wird, also kein Fehlerfall vorliegt, wird die elektrische Spule 56 geeignet angesteuert. Hierbei erfolgt keine Bestromung der Treiberspule 80, und der Anker 58 sowie das Betätigungselement 82, sofern das Verbindungselement 64 starr ausgeführt ist, werden in Öffnungsrichtung 72 zur Unterbrechung des elektrischen Stromflusses I bewegt. Falls ein Fehlerfall vorliegt, also beispielsweise ein Überstrom, wird zusätzlich die Treiberspule 80 bestromt, was die Beschleunigung des Ankers 58 in Öffnungsrichtung 72 vergrößert.

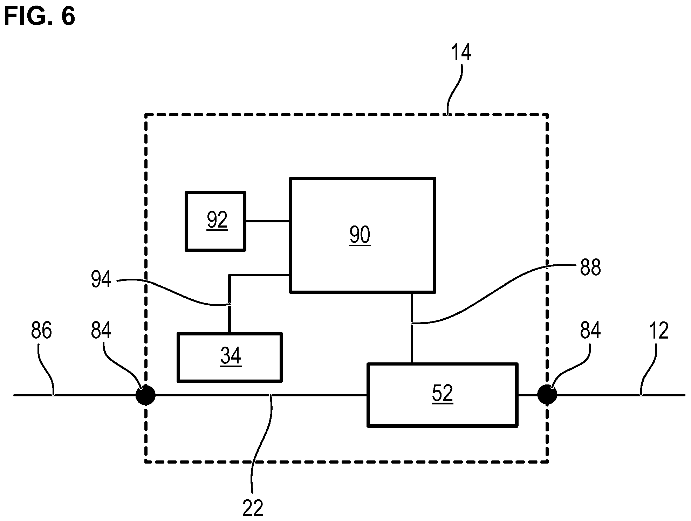

In Fig. 6 ist schematisch in einer Blockbilddarstellung eine erste Ausführungsform des Schutzschalters 14 dargestellt. Der Schutzschalter 14 weist den Hauptstrompfad 22 auf, der endseitig jeweils einen Kontaktanschluss 84 zur elektrischen Kontaktierung einer Stromleitung 86 des Hochvoltbordnetzes 12 aufweist. Der Hauptstrompfad 22 weist den Schalter 52 auf, sodass mittels des Schalters 52 ein elektrischer Stromfluss I zwischen den beiden Kontaktanschlüssen 84 eingestellt werden kann. Folglich werden die beiden Kontaktanschlüsse 84 mittels des Schalters 52 entweder elektrisch miteinander kontaktiert oder aber elektrisch voneinander getrennt. Der Schalter 52 ist mittels einer ersten Signalleitung 88 mit einer Steuereinheit 90 signaltechnisch gekoppelt, die einen Energiespeicher 92 in Form einer Batterie aufweist. Bei Betrieb wird die Batterie 92 mittels des Niedervoltbordnetzes 16 geladen. Aufgrund des Energiespeichers 92 ist auch bei einem Ausfall des Niedervoltbordnetzes 16 ein Betrieb der Steuereinheit 90 und des Schutzschalters 14 ermöglicht.

Die Steuereinheit 90 ist ferner mittels einer zweiten Signalleitung 94 mit dem Reed-Relais 34 signaltechnisch gekoppelt, das beispielsweise innerhalb des Trägers 28 angeordnet ist. Mittels des Reed-Relais 34 wird der elektrische Stromfluss I erfasst, und mittels der zweiten Signalleitung 94 wird dieser Wert an die Steuereinheit 90 geleitet. Sofern der erfasste Wert einen bestimmten Schwellwert überschreitet, wird mittels der ersten Signalleitung 88 der Schalter 52 angesteuert, sodass der elektrische Stromfluss I zwischen den beiden Kontaktanschlüssen 84 des Schutzschalters 14 unterbunden wird. Der Schalter 52 ist beispielsweise ein elektromechanischer Schalter oder ein Halbleiterschalter, wie ein Leistungshalbleiterschalter, wie z.B. ein MOSFET oder GTO. Je nach Ausgestaltung des Schalters 52 wird hierbei mittels der ersten Signalleitung 88 ein elektrischer Stromfluss oder aber eine elektrische Spannung als Signal zum Betätigen des Schalters 52 verwendet.

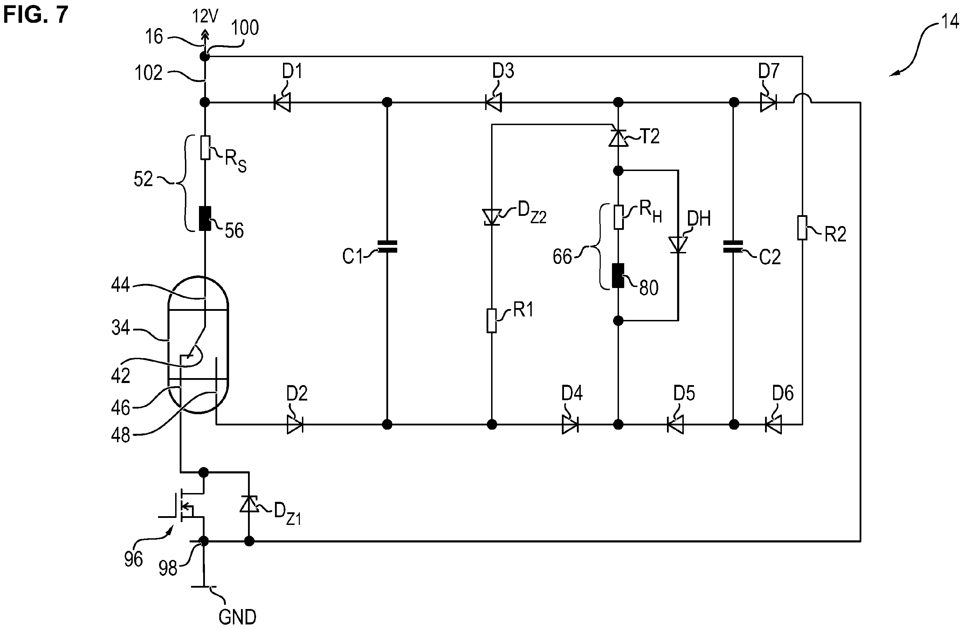

In Fig. 7 ist eine weitere Ausführungsform des Schutzschalters 14 dargestellt, bei dem der Schalter 52 wiederum als elektromechanischer Schalter ausgestaltet ist und folglich die elektrische Spule 56 aufweist. Innerhalb der elektrischen Spule 56 ist der Anker 58 angeordnet, an dem die Kontaktbrücke 54 oder anderweitige Schaltkontakte angebunden sind, oder mit dem diese zumindest in Wirkverbindung stehen. Der Schalter 52 weist einen Spulenwiderstand Rₛ auf, der ein ohmscher Widerstand ist und beispielsweise aufgrund von unterschiedlichen Materialien innerhalb des Schalters 52 gebildet ist und in Reihe zu der elektrischen Spule 56 geschaltet ist. Die elektrische Spule 56 ist elektrisch in Reihe mit dem Reed-Relais 34 geschaltet und elektrisch direkt mit dem Mittelanschluss 44 des Reed-Relais 34 kontaktiert. Der erste Anschluss 46 des Reed-Relais 34 ist gegen ein Halbleiterschaltelement 96 in Form eines Feldeffekttransistors geführt, und zwar gegen dessen "drain", die "source" des Feldeffekttransistors ist mit einem zweiten Kontaktanschluss 98 elektrisch kontaktiert, mittels dessen ein Anschluss des Schutzschalters 14 an das Niedervoltbordnetz 16 bereitgestellt ist. Parallel zu dem Feldeffekttransistor ist hierbei eine erste Zenerdiode D_{Z1} geschaltet. Der zweite Kontaktanschluss 98 ist gegen Masse GND geführt. Der Spulenwiderstand Rₛ hingegen ist gegen einen dritten Kontaktanschluss 100 geführt, dessen Potential 12 Volt beträgt und mittels der Niedervoltbatterie 18 bereitgestellt wird. Zwischen dem zweiten und dritten Kontaktanschluss 98,100 ist folglich ein Nebenstrompfad 102 gebildet, der die elektrische Spule 56 und das Reed-Relais 34 aufweist, die elektrisch in Reihe geschaltet sind.

Parallel zu dem Reed-Relais 34 und der elektrischen Spule 56 sowie dem Spulenwiderstand Rₛ ist eine erste Diode D1, ein erster Kondensator C1 und eine zweite Diode D2 geschaltet, die wiederum in Reihe geschaltet sind. Hierbei ist die zweite Diode D2 mit dem zweiten Anschluss 48 des Reed-Relais 34 elektrisch kontaktiert, wobei die Durchlassrichtung von dem zweiten Anschluss 48 in Richtung des ersten Kondensators C1 gerichtet ist. Parallel zu dem ersten Kondensator C1 ist die Treiberspule 80 des Hilfsantriebs 66 geschaltet, der aufgrund der unterschiedlich verwendeten Materialien ebenfalls einen ohmschen Widerstand in Form eines Treiberspulenwiderstandes R_{H} aufweist. Zwischen dem Hilfsantrieb 66 und dem ersten Kondensator C1 ist einerseits eine dritte Diode D3 mit einer der Elektroden des ersten Kondensators C1 und eine vierte Diode D4 mit der verbleibenden Elektrode des ersten Kondensators C1 elektrisch kontaktiert.

Der Hilfsantrieb 66 weist ferner eine weitere Diode DH auf, die parallel zu der Treiberspule 80 und dem Treiberspulenwiderstand R_{H} geschaltet ist und deren Durchlassrichtung entgegen der der vierten Diode D4 und der dritten Diode D3 gerichtet ist. Zwischen der dritten Diode D3 und dem Treiberspulenwiderstand R_{H} ist ein zweiter Thyristor T2 geschaltet, dessen Gate mit einer Reihenschaltung aus einer zweiten Zenerdiode D_{Z2} und einem ersten Widerstand R1 elektrisch kontaktiert ist. Eine weitere Zenerdiode ist insbesondere nicht vorhanden, sodass der Hilfsantrieb 66 lediglich eine einzige Zenerdiode aufweist, nämlich die zweiten Zenerdiode D_{Z2}. Der erste Widerstand R1 ist elektrisch mit der Elektrode des ersten Kondensators kontaktiert, die ebenfalls mit der zweiten Diode D2 und der vierten Diode D4 elektrisch kontaktiert ist. Parallel zu der Reihenschaltung der Treiberspule 80 und dem Treiberspulenwiderstand R_{H} sowie dem zweiten Thyristor T2 ist eine Reihenschaltung aus einer fünften Diode D5 und einem zweiten Kondensator C2 parallel geschaltet, wobei die Kathode der fünften Diode D5 gegen die Kathode der vierten Diode geführt ist.

Die mit der fünften Diode D5 kontaktierte Elektrode des zweiten Kondensators C2 ist ferner gegen eine Kathode einer sechsten Diode D6 geführt, deren Anode über einen zweiten Widerstand R2 mit dem dritten Kontaktanschluss 100 elektrisch kontaktiert ist. Die sowohl mit dem zweiten Thyristor T2 und der dritten Diode D3 elektrisch kontaktierte Elektrode des zweiten Kondensators C2 ist über eine siebte Diode D7 gegen den zweiten Kontaktanschluss 98 geführt, wobei der zweite Kondensator C2 mit der Anode der siebten Diode D7 elektrisch kontaktiert ist. Folglich ist die Treiberspule 80 mittels des zweiten Thyristors T2 einerseits sowohl mit dem zweiten Kondensator C2 elektrisch kontaktiert. Andererseits ist die Treiberspule mit dem ersten Kondensator C1 gekoppelt.

Bei Betrieb des Schutzschalters 14 wird das Halbleiterschaltelement 96 angesteuert, sodass der Nebenstrompfad 102 stromführend ist. Infolgedessen ist die elektrische Spule 56 bestromt und die Schaltkontakte des Schalters 52 werden geschlossen, weswegen auch der Hauptstrompfad 22 elektrisch leitend ist. Infolgedessen ist ein Betrieb des Elektromotors 8 ermöglicht. Ferner wird der zweite Kondensator C2 über die sechste Diode D6 und die siebte Diode D7 aufgeladen, sodass an diesem die elektrische Spannung des Niedervoltbordnetzes 16 anliegt, in diesem Beispiel 12 Volt. Eine Entladung des zweiten Kondensators C2 wird mittels der sechsten Diode D6 verhindert. Sofern mittels des Reed-Relais 34 ein Überstrom durch den Hauptstrompfad 22 detektiert wird, also falls der elektrische Stromfluss I über den Hauptstrompfad 22 einen bestimmten Schwellwert überschreitet, und folglich das den Hauptstrompfad 22 umgebende Magnetfeld einen bestimmten Wert übersteigt, wird der Schaltkontakt 42 des Reed-Relais von dem ersten Anschluss 46 beabstandet und mit dem zweiten Anschluss 48 elektrisch kontaktiert. Infolgedessen wird ein Stromfluss zwischen dem zweiten und dritten Kontaktanschluss 98,100 über den Nebenstrompfad 102 unterbrochen. Die noch in der elektrischen Spule 56 gespeicherte elektrische Energie wird über die zweite Diode D2 auf den ersten Kondensator C1 übertragen. Ein Zurückschwingen der Energie von dem ersten Kondensator C1 zu der Spule 56 wird aufgrund der zweiten Diode D2 und der ersten Diode D1 unterbunden. Infolgedessen wird das den Anker 58 innerhalb der elektrischen Spule 56 haltende magnetische Feld vergleichsweise schnell abgebaut. Folglich wird - falls der Anker 58 mittels der Spule 56 entgegen einer Federkraft gehalten wird - der Anker 58 aufgrund der Federkraft vergleichsweise frühzeitig bewegt wird.

Falls der erste Kondensator C1 mittels der elektrischen Spule 56 aufgeladen wurde, wird, sofern die an diesem anliegenden elektrischen Spannung eine Schwelle überschreitet, die mittels des ersten Widerstandes R1, der zweiten Zenerdiode D_{Z2} der dritten Diode D3 sowie des ersten Kondensators C1 einstellbar ist, der zweite Thyristor T2 gezündet. Folglich wird die im ersten Kondensator C1 gespeicherte elektrische Energie über die Treiberspule 38 abgebaut, die folglich bestromt wird.

Ferner wird die Treiberspule 80 aufgrund des gezündeten zweiten Thyristors T2 mittels des zweiten Kondensators C2 bestromt, der im Vergleich zum ersten Kondensator C1 eine größere gespeicherte Energiemenge aufweist. Ein Zurückschwingen und folglich Umpolen der Treiberspule 80 wird mittels der vierten Diode D4 und fünften Diode D5 unterbunden. Aufgrund der in dem ersten Kondensator C1 und in dem zweiten Kondensator C2 gespeicherten Energie steht für die Treiberspule 80 eine vergleichsweise große Energiemenge zum Betrieb zur Verfügung. Vorzugsweise ist der Hilfsantrieb 66 gemäß der in Fig. 4 gezeigten Ausführungsform ausgestaltet, bei der folglich bereits bei einer kleinen Bewegung des Betätigungselements 82 aufgrund des mechanischen Federelements 68 eine vergleichsweise große Kraft, die die der mittels der Treiberspule 80 aufbringbare Kraft übersteigt, auf den Anker 58 wirkt. Somit wird das Schalten der Schaltkontakte des Schalters 52 beschleunigt wird. Infolgedessen ist bereits nach einer vergleichsweise kurzen Zeitspanne nach Detektion des Überstroms mittels des Reed-Relais 34 der Hauptstrompfad 22 unterbrochen.

In Fig. 8 ist eine weitere Ausführungsform des Schutzschalters gemäß Fig. 7 dargestellt. Der Nebenstrompfad 102 mit dem zwischen dem zweiten Kontaktanschluss 98 und dem dritten Kontaktanschluss 100 in Reihe geschalteten elektrischen Spule 56, Reed-Relais 34 sowie dem Halbleiterschaltelement 96 ist hierbei im Vergleich zu der vorherigen Ausführungsform unverändert belassen. Auch die Kontaktierung der elektrischen Spule 56 mit dem Mittelanschluss 44 und die Kontaktierung des ersten Anschlusses 46 mit dem Halbleiterschaltelement 96 entsprechen der vorhergehenden Ausführungsform. Auch ist das Reed-Relais 34 und die Spule 56 mittels des ersten Kondensators C1, der ersten Diode D1 und der zweiten Diode D2 elektrisch überbrückt, wobei die Anode der zweiten Diode D2 mit dem zweiten Anschluss 48 elektrisch kontaktiert ist, ebenso wie in der vorhergehenden Ausführungsform.

Abweichend zur vorhergehenden Ausführungsform ist parallel zum ersten Kondensator C1 die dritte Diode D3 und die zweite Zenerdiode D_{Z2} geschaltet, deren Anoden elektrisch miteinander kontaktiert sind. Die Kathode der dritten Diode D3 ist gegen die Anode der ersten Diode D1 und die Kathode der zweiten Zenerdiode D_{Z2} ist gegen die Kathode der zweiten Diode D2 geführt.

Der Schutzschalter 14 weist ferner einen Optokoppler IC1 auf, dessen Leuchtdiode 104 kathodenseitig mit der Anode der ersten Diode D1 und anodenseitig über den ersten Widerstand R1 sowie eine dritte Zenerdiode D_{Z3} mit der Kathode der zweiten Diode D2 elektrisch kontaktiert ist. Die Kathode der zweiten Diode D2 und die Kathode der dritten Zenerdiode D_{Z3} sind miteinander elektrisch kontaktiert. Folglich ist die Leuchtdiode 104 des Optokopplers IC1 parallel zu dem ersten Kondensator C1 geschaltet. Ausgangsseitig weist der Optokoppler IC1 einen DIAC 106 auf, der einerseits mit dem Gate eines ersten Thyristors T1 und über einen vierten Widerstand R4 sowie einen dritten Widerstand R3 mit der Anode des ersten Thyristors T1 elektrisch kontaktiert ist. Die Kathode des ersten Thyristors T1 ist mit dem Gate des zweiten Thyristors T2 elektrisch kontaktiert, dessen Anode wiederum mit dem Hilfsantrieb 66 und folglich mit der Treiberspule 88 elektrisch kontaktiert ist. Die Verschaltung des zweiten Thyristors T2 mit dem Hilfsantrieb 66 entspricht hierbei ebenfalls der vorherigen Ausgestaltungsform. Die Treiberspule 88 ist ferner sowohl gegen den vierten als auch gegen den dritten Widerstand R4, R3 geführt, also mittels des dritten Widerstands R3 gegen den ersten Thyristors T1 und mittels des vierten Widerstands R4 gegen den DIAC 106.

Parallel zu dem Hilfsantrieb 66 und dem zweiten Thyristor T2 ist wiederum der zweite Kondensator C2 und die fünfte Diode D5 elektrisch geschaltet, wobei die fünfte Diode D5 und der zweite Kondensator C2 zueinander in Reihe geschaltet sind. Auch sind die beiden Elektroden des zweiten Kondensators C2 einerseits mit der siebten Diode D7 und andererseits mit der sechsten Diode D6 und dem zweiten Widerstand R2 elektrisch kontaktiert. Diese sind jedoch nicht gegen den Nebenstrompfad 102 sondern gegen den Hauptstrompfad 22 geführt, und zwar beidseitig eines Wirkwiderstandes R_{LOAD} des Elektromotors 8, der folglich mittels des Schutzschalters 14 überwacht wird. Infolgedessen liegt bei Betrieb an dem zweiten Kondensator C2 die elektrische Spannung der Hochvoltbatterie an und zwar ein positives Potential HV+ und ein negatives Potential HV- der Hochvoltbatterie 10. Die zwischen den beiden Potentialen gebildete elektrische Spannung beträgt 400 Volt, sodass an dem zweiten Kondensator C2 ebenfalls 400 Volt anliegen.

Bei Betrieb des Schutzschalters 14 ist das Halbleiterschaltelement 96 derart betätigt, dass der Nebenstrompfad 102 stromführend ist. Infolgedessen ist die elektrische Spule 56 des Schalters 52 bestromt, und die Kontaktbrücke 54 befindet sich in einem geschlossenen Zustand bewegt, sodass mittels des Hauptstrompfads 22 der elektrische Stromfluss I ermöglicht ist. Hierbei wird der Elektromotor 8 bestromt und folglich das Kraftfahrzeug 12 angetrieben. Der zweite Kondensator C2 ist hierbei stets auf die mittels der Hochvoltbatterie 10 bereitgestellte elektrische Spannung aufgeladen, sodass an diesem 400 Volt anliegen. Ein Entladen wird mittels des stromsperrenden zweiten Thyristors T2 und der sechsten Diode D6 unterbunden. Zur geplanten Unterbrechung der Bestromung des Elektromotors 8 wird beispielsweise erneut das Halbleiterschaltelement 96 betätigt, sodass der Stromfluss über den Nebenstrompfad 102 unterbrochen ist, und folglich die Kontaktbrücke 54 in eine geöffnete Position bewegt und somit die Bestromung des Elektromotors 8 unterbrochen wird.

Sofern bei Betrieb mittels des Hauptstrompfads 22 ein Überstrom geführt wird, wird aufgrund des sich geänderten Magnetfelds das Reed-Relais 34 betätigt und folglich der Schaltkontakt 42 zu dem zweiten Anschluss 48 verschwenkt, sodass eine Bestromung der elektrischen Spule 46 unterbrochen wird. Aufgrund einer nicht dargestellten Federbelastung wird hierbei die Kontaktbrücke 54, die mit dem Anker 58 gekoppelt ist, in einen geöffneten Zustand verbracht. Die elektrische Spule 56 wird wiederum auf den ersten Kondensator C1 entladen, sodass der Verbringung der Kontaktbrücke 54 in den geöffneten Zustand lediglich eine vergleichsweise geringe magnetische Kraft aufgrund des weiterhin mittels der elektrischen Spule 56 erstellten Magnetfelds entgegenwirkt.

Mittels der zweiten Zenerdiode D_{Z2} wird eine Überspannung an dem ersten Kondensator C1 verhindert, sodass dieser vor einer Zerstörung bewahrt wird. Die Sperrspannung der dritten Zenerdiode D_{Z3} ist geringer als die Zenerspannung der zweiten Zenerdiode D_{Z2}, sodass, wenn der erste Kondensator C1 zu einem bestimmten Maß geladen ist, die Leuchtdiode 104 des Optokopplers IC1 aktiviert wird. Infolgedessen zündet der erste Thyristor T1, was wiederum zur Zündung des zweiten Thyristors T2 führt. Infolgedessen wird der zweite Kondensator C2 über die Treiberspule 88 des Hilfsantriebs 66 entladen. Zusammenfassend ist die Treiberspule 88 mittels der beiden Thyristoren T1 und T2 sowie des Optokopplers IC1 mit dem ersten Kondensator C1 gekoppelt. Aufgrund der Durchschaltung des Thyristors T2 ist eine vergleichsweise steile Stromanstiegsgeschwindigkeit gegeben, sodass mittels des Hilfsantriebs 66 eine vergleichsweise große Kraft ausgeübt wird. Nach der endlichen Einschaltzeit des zweiten Thyristors T2 und der Entladung des zweiten Kondensators C2 wird der Haltestrom der beiden Thyristoren T1 und T2 unterschritten, sodass diese erneut zu sperren beginnen, was eine Sicherheit erhöht. Zweckmäßigerweise wird als Hilfsantrieb die in Fig. 5 dargestellte Variante verwendet und folglich der Anker 58 mittels des Betätigungselements 82 direkt beeinflusst. Aufgrund der an dem zweiten Kondensator C2 vergleichsweise großen anliegenden elektrischen Spannung ist die mittels des Wirbelstromantriebs 80 aufgebrachte Kraft zur vergleichsweise schnellen Bewegung des Ankers 58 ausreichend.

In Fig. 9 ist eine weitere Abwandlung des Schutzschalters 14 dargestellt, wobei die Ausgestaltung des Hauptstrompfads 22 sowie die Kontaktierung des Hauptstrompfads 22 mit der siebten Diode D7 einerseits und über den zweiten Widerstand R2 mit der sechsten Diode D6 andererseits unverändert belassen ist. Auch ist der Nebenstrompfad 102 sowie die Parallelschaltung des ersten Kondensators C1, der dritten Diode D3, der zweiten Zenerdiode D_{Z2} sowie des Optokopplers IC1, der in Reihe zu dem ersten Widerstand R1 und der dritten Zenerdiode D_{Z3} geschalten ist, unverändert belassen. Auch ist der Hilfsantrieb 66 gemäß der in Fig. 5 dargestellten Variante ausgestaltet und umfasst die Treiberspule 80, den Treiberspulenwiderstand R_{H} sowie die hierzu parallel geschaltete Diode des Hilfsantriebs DH.

Der DIAC 106 des Optokopplers IC1 ist wiederum mit dem Gate des ersten Thyristors T1 und über den vierten Widerstand R4 und den dritten Widerstand R3 mit der Anode des ersten Thyristors T1 elektrisch kontaktiert. Die Kathode des ersten Thyristors T1 ist gegen das Gate des zweiten Thyristors T2 geführt, dessen Kathode mit der Anode der siebten Diode D7 elektrisch kontaktiert ist. Ferner ist die Kathode des zweiten Thyristors T2 sowohl mit dem Treiberspulenwiderstand R_{H} als auch der Kathode der Diode des Hilfsantriebs DH elektrisch kontaktiert, die parallel zu dem Treiberspulenwiderstand R_{H}, der Treiberspule 80 sowie einer achten Diode D8 geschaltet ist, deren Kathode mit der Anode der Diode des Hilfswiderstands DH elektrisch kontaktiert ist. Mit der Kathode der achten Diode D8 ist ferner eine Elektrode des zweiten Kondensators C2 elektrisch kontaktiert, deren verbleibende Elektrode mit der Anode des zweiten Thyristors T2 sowie dem vierten und dritten Widerstand R4,R3 elektrisch kontaktiert ist. Folglich ist wiederum die Treiberspule 80 mittels des zweiten Thyristors T2 mit dem zweiten Kondensator C2 elektrisch kontaktiert, und die Treiberspule 80 ist mittels der beiden Thyristoren T1, T2 und dem Optokoppler IC1 mit dem ersten Kondensator C1 gekoppelt.

Die Anode des zweiten Thyristors T2 ist über eine neunte Diode D9 und einen dritten Kondensator C3 gegen die Kathode der sechsten Diode D6 geführt, wobei die Sperrrichtung der neunten Diode D9 der Sperrrichtung der sechsten Diode D6 entspricht. Folglich ist der zweite Kondensator C2 lediglich mittels des dritten Kondensators C3 mit dem Hauptstrompfad 22 einseitig verbunden, sodass der zweite Kondensator C2 von dem Hauptstrompfad 22 galvanisch getrennt ist. Optional ist der zweite Kondensator C2 mittels eines fünften Widerstandes R5 und/oder der dritte Kondensator C3 mittels eines sechsten Widerstands R6 überbrückt, die jeweils einen vergleichsweise großen Widerstandswert aufweisen.

Bei Betrieb wird wiederum das Halbleiterschaltelement 96 betätigt, sodass die Spule 56 bestromt und folglich der Schalter 52 in einen stromführenden Zustand verbracht wird. Infolgedessen ist der elektrische Stromfluss I über den Hauptstrompfad 22 ermöglicht. Mittels des Hauptstrompfads 22 wird ferner der zweite Kondensator C2 über den dritten Kondensator C3 geladen, wobei an dem zweiten Kondensator C2 nicht die vollständige mittels der Hochvoltbatterie 10 bereitgestellte elektrische Spannung anliegt, sondern sich gemäß des kapazitiven Teilungsverhältnisses zwischen dem zweiten Kondensator C2 und dem dritten Kondensator C3 einstellt. Da an dem zweiten Kondensator C2 eine verringerte Spannung anliegt, können einzelne Komponenten des Schutzschalters 14, wie z.B. der zweite Kondensator C2, die sechste Diode D6, der zweite Widerstand R2,..... für geringere Nennleistungen ausgelegt werden, sodass vergleichsweise kostengünstige Komponenten herangezogen werden können. Ferner ist mittels des dritten Kondensators C3 der zweiten Kondensators C2 galvanisch von dem Hauptstrompfad 22 getrennt, sodass bei einem Kurzschluss oder einer Fehlfunktion des zweiten Kondensators C2 kein Kurzschluss der beiden Pole HV+ und HV- der Hochvoltbatterie 10 erfolgt, die anderweitig zu einem Abbrand oder einer vergleichsweise starken Beschädigung der Hochvoltbatterie 10 führen könnte.

Bei einem Betätigen des Reed-Relais 34 wird wiederum der erste Kondensator C1 aufgeladen. Sofern dieser einen bestimmten Ladezustand aufweist, wird aufgrund der dritten Zenerdiode D_{Z3} die Leuchtdiode 104 des Optokopplers IC1 aktiviert, weswegen sowohl der erste Thyristor T1 als auch der zweite Thyristor T2 zünden. Folglich wird der zweite Kondensator C2 über die Treiberspule 80 entladen, weswegen der das Betätigungselement 82 des Hilfsantriebs 66 von der Treiberspule 80 aufgrund der induzierten Wirbelströme wegbewegt wird, was eine Öffnungsbewegung der Kontaktbrücke 54 beschleunigt.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebenen Einzelmerkmale auch auf andere Weise miteinander kombinierbar, ohne den Gegenstand der Erfindung zu verlassen.

### Bezugszeichenliste

- 2: Kraftfahrzeug
- 4: Antriebsrad
- 6: Rad
- 8: Elektromotor
- 10: Hochvoltbatterie
- 11: elektrische Leitung
- 12: Hochvoltbordnetz
- 14: Schutzschalter
- 16: Niedervoltbordnetz
- 18: Niedervoltbatterie
- 20: Stellantrieb
- 22: Hauptstrompfad
- 24: Stromschiene
- 26: Isolationsschicht
- 28: Träger
- 30: Öffnung
- 32: Aussparung
- 34: Reed-Relais
- 36: Luftspalt
- 38: Halter
- 40: Glasrohr
- 42: Schaltkontakt
- 44: Mittelanschluss
- 46: erster Anschluss
- 48: zweiter Anschluss
- 50: Richtung
- 52: Schalter
- 54: Kontaktbrücke
- 56: elektrische Spule
- 58: Anker
- 60: Kupplungsstelle
- 62: Joch
- 64: Verbindungselement
- 66: Hilfsantrieb
- 68: mechanisches Federelement
- 70: Endelement
- 72: Öffnungsrichtung
- 74: Halteelement
- 76: zweites mechanisches Federelement
- 78: Wirbelstromantrieb
- 80: Treiberspule
- 82: Betätigungselement
- 84: Kontaktanschluss
- 86: Stromleitung
- 88: erste Signalleitung
- 90: Steuereinheit
- 92: Energiespeicher
- 94: zweite Signalleitung
- 96: Halbleiterschaltelement
- 98: zweiter Kontaktanschluss
- 100: dritter Kontaktanschluss
- 102: Nebenstrompfad
- 104: Leuchtdiode
- 106: Diac

- I: elektrischer Stromfluss
- GND: Masse

- C1: erster Kondensator
- C2: zweiter Kondensator
- C3: dritter Kondensator
- D1: erste Diode
- D2: zweite Diode
- D3: dritte Diode
- D4: vierte Diode
- D5: fünfte Diode
- D6: sechste Diode
- D7: siebte Diode
- D8: achte Diode
- D9: neunte Diode
- DH: Diode des Hilfsantriebs
- D_{Z1}: erste Zenerdiode
- D_{Z2}: zweite Zenerdiode
- D_{Z3}: dritte Zenerdiode
- IC1: Optokoppler

- Rₛ: Spulenwiderstand
- R_{H}: Treiberspulenwiderstand
- R1: erster Widerstand
- R2: zweiter Widerstand
- R3: dritter Widerstand
- R4: vierter Widerstand
- R5: fünfter Widerstand
- R6: sechster Widerstand
- RLOAD: Wirkwiderstand
- HV+: positives Potential
- HV-: positives Potential

- T1: erster Thyristor
- T2: zweiter Thyristor

## Patentansprüche

1. Schutzschalter (14) zur Gleichstromunterbrechung, insbesondere eines Bordnetzes (12, 16) eines Fahrzeugs (2), mit einem Hauptstrompfad (22), der einen Schalter (52) aufweist, und mit einem Reed-Relais (34) zur Erfassung eines elektrischen Stromflusses (I) über den Hauptstrompfad (22), wobei der Schalter (52) mit dem Reed-Relais (34) gekoppelt ist.

2. Schutzschalter (14) nach Anspruch 1,
**dadurch gekennzeichnet,**
**dass** das Reed-Relais (34) elektrisch in Reihe mit einer elektrischen Spule (56) des Schalters (52) geschaltet ist.

3. Schutzschalter (14) nach Anspruch 2,
**dadurch gekennzeichnet,**
**dass** das Reed-Relais (34) eine Wechselschalterkonfiguration mit einem mit der elektrischen Spule (56) des Schalters (52) elektrisch kontaktierten Mittelanschluss (44) aufweist, und dass elektrisch parallel zu dem Reed-Relais (34) und der elektrischen Spule (56) ein erster Kondensator (C1) geschaltet ist, der insbesondere in Reihe mit einer Diode (D1, D2) geschaltet ist.

4. Schutzschalter (14) nach Anspruch 3,
**gekennzeichnet durch**
eine Treiberspule (80), die elektrisch mit einem zweiten Kondensator (C2) kontaktiert und mit dem ersten Kondensator (C1) gekoppelt ist.

5. Schutzschalter (14) nach Anspruch 4,
**dadurch gekennzeichnet,**
**dass** die Treiberspule (80) mittels eines Thyristors (T2) mit dem zweiten Kondensator (C2) elektrisch kontaktiert ist.

6. Schutzschalter (14) nach Anspruch 4 oder 5,
**dadurch gekennzeichnet,**
**dass** die Treiberspule (80) mittels eines Kopplers (IC1), insbesondere eines Optokopplers, mit dem ersten Kondensator (C1) gekoppelt ist, wobei der zweite Kondensator (C2) mit dem Hauptstrompfad (22) elektrisch kontaktiert ist.

7. Schutzschalter (14) nach Anspruch 6,
**dadurch gekennzeichnet,**
**dass** eine Elektrode des zweiten Kondensators (C2) mittels eines dritten Kondensators (C3) mit dem Hauptstrompfad (22) elektrisch kontaktiert ist.

8. Schutzschalter (14) nach Anspruch 4 oder 5,
**dadurch gekennzeichnet,**
**dass** die Treiberspule (80) elektrisch parallel zu dem erstem Kondensator (C1) geschaltet ist.

9. Schutzschalter (14) nach einem der Ansprüche 2 bis 8,
**gekennzeichnet durch**
einen das Reed-Relais (34) und die elektrische Spule (56) des Schalters (52) aufweisenden Nebenstrompfad (102).

10. Schutzschalter (14) nach Anspruch 1,
**dadurch gekennzeichnet,**
**dass** das Reed-Relais (34) signaltechnisch mit einer Steuereinheit (90) gekoppelt ist, die signaltechnisch mit dem Schalter (52) verbunden ist, und die insbesondere einen Energiespeicher (92) aufweist.

11. Schutzschalter (14) nach einem der Ansprüche 1 bis 10,
**dadurch gekennzeichnet,**
**dass** der Schalter (52) einen innerhalb der elektrischen Spule (56) angeordneten Anker (58) aufweist, der mit einem Hilfsantrieb (66) gekoppelt ist, der insbesondere einen Wirbelstromantrieb (78) aufweist.

12. Schutzschalter (14) nach Anspruch 11,
**dadurch gekennzeichnet,**
**dass** der Hilfsantrieb (66) mittels eines biegeschlaffen Verbindungselements (64) an dem Anker (58) angebunden ist, und insbesondere ein mechanisches Federelement (68) aufweist.

13. Schutzschalter (14) nach einem der Ansprüche 1 bis 12,
**dadurch gekennzeichnet,**
**dass** der Hauptstrompfad (22) eine Stromschiene (24) aufweist, die umfangsseitig, insbesondre formschlüssig, von einem Träger (28) umgeben ist, der eine Aussparung aufweist (32) innerhalb derer das Reed-Relais (34) positioniert ist.

14. Schutzschalter (14) nach Anspruch 13,
**dadurch gekennzeichnet,**
**dass** das Reed-Relais (34) unter Ausbildungen eines Luftspalts (36) mittels eines Halters (38) innerhalb der Aussparung (32) gehalten ist, wobei der Halter (38) insbesondere aus einem dia- oder paramagnetischen Material gefertigt ist.

15. Verwendung eines Schutzschalters (14) nach einem der Ansprüche 1 bis 14 zur Absicherung eines Bordnetzes (12, 16) eines Fahrzeugs (2), insbesondere eines Hochvoltbordnetzes (12).
